# EUROPÄISCHE PATENTSCHRIFT

(11) **EP 1 568 901 B1**
(45) Veröffentlichungstag und Bekanntmachung des Hinweises auf die Patenterteilung: **03.05.2006**
(21) Anmeldenummer: 04017161.3
(22) Anmeldetag: 21.07.2004
(51) Int. Cl.: F16B 25/00

(54) **Gewindeformende Schraube**
Thread-forming screw
Vis autotaraudeuse

(30) Priorität: 25.02.2004 DE 202004002877 U
(43) Veröffentlichungstag der Anmeldung: 31.08.2005
(73) Patentinhaber: A-Z Ausrüstung und Zubehör GmbH & Co. KG, 45525 Hattingen (DE)
(72) Erfinder: Dicke, Robert, 58256 Ennepetal (DE)
(74) Vertreter: Zapf, Christoph

(56) Entgegenhaltungen:
- EP-B- 0 394 719
- DE-A- 3 335 092
- DE-U- 8 409 108

## Beschreibung

Die vorliegende Erfindung betrifft eine Schraube gemäß dem Oberbegriff des Patentanspruchs 1 bzw. des Patentanspruchs 3.

Eine solche Schraube ist in der DE 33 35 092 A1 beschrieben. Sie hat sich in der Praxis sehr gut bewährt, weil ein hohes Lösemoment bei geringem Eindrehmoment erreicht wird. Das Gewinde verläuft bis zum Ende der Schraubenspitze, wobei es ausgehend von der Schraubenspitze mindestens über den ersten sich anschließenden Gewindegang mit den Einbuchtungen und der wellenförmigen Gewindekante ausgeführt ist. Dadurch wirkt die Spitze als eine Art reibendes Werkzeug, wobei die Gewindeformung unmittelbar an der Spitze der Schraube erfolgt, so dass sich ein sicheres Zentrieren und Angreifen im Werkstück unmittelbar beim Ansetzen der Schraube ergibt. Bei dieser bekannten Schraube sind die Einbuchtungen symmetrisch zur Mittellinie der wellenförmigen Gewindekante als symmetrische Paraboloide geformt.

Die EP 0 394 719 B1 beschreibt ebenfalls eine gattungsgemäße gewindeformende Schraube, bei der aber die Einbuchtungen derart asymmetrisch ausgebildet sind, dass ihre in Eindrehrichtung vorderen Flankenflächen steiler verlaufen als die in Eindrehrichtung hinteren Flankenflächen. Dadurch wird eine weitere Minderung des Eindrehmoments bei gleichzeitiger Erhöhung des Lösemoments erreicht. Beim Einschrauben ist der Widerstand durch die flachere Ausführung der in Eindrehrichtung hinteren Parabolteile geringer, wohingegen das Lösen der Schraube aufgrund der steileren Anordnung der in Eindrehrichtung vome liegenden Parabolflächen erschwert wird.

Das Dokument DE 84 09 108 U beschreibt eine gewindeformende Schraube, deren Gewinde nicht gattungsgemäß wellenförmig mit über den Verlauf hinweg abwechselnden Bergen und Tälem mit Flanken-Einbuchtungen ausgebildet ist, sondem über den schraubenlinienförmigen Gewindeverlauf hinweg mit durchgehend gleichem Profilquerschnitt zwei radial benachbarte Flankenbereiche mit unterschiedlichen Flankenwinkeln aufweisen soll, und zwar soll der Flankenwinkel im dem Schraubenkem nahen Bereich mit etwa 40° steiler als im radial äußeren Bereich des Gewindes sein. Somit weist die radial äußere Gewindekante über den Verlauf des Gewindes hinweg einen durchgehend gleichen Spitzenwinkel, und zwar etwa 30°, auf.

Der vorliegenden Erfindung liegt die Aufgabe zugrunde, eine gattungsgemäße Schraube so zu verbessem, dass das Eindrehmoment noch weiter reduziert wird, gleichzeitig aber auch ein hohes Lösemoment gewährleistet ist. Dabei soll die Schraube mit optimierten Eigenschaften einerseits zum Einschrauben in weichere Materialien, wie Holz und dergleichen, insbesondere ohne Vorbohren und somit selbstlochend, bzw. andererseits zum Einschrauben in härtere Materialien, z. B. Kunststoffe und Metalle, insbesondere in ein Kemloch, konzipiert sein.

Erfindungsgemäß wird dies einerseits durch die Merkmale des unabhängigen Patentanspruchs 1 speziell für eine Verwendung der Schraube zum Einschrauben in weichere Materialien, wie Holz oder holzähnliche Werkstoffe, erreicht.

Andererseits wird durch die Merkmale des unabhängigen Patentanspruchs 3 eine Schraube definiert, die speziell für eine Verwendung zum Einschrauben in härtere bzw. widerstandsfähige Materialien, insbesondere Kunststoff oder Metalle, konzipiert ist.

Vorteilhafte Ausgestaltungsmerkmale sind in den abhängigen Ansprüchen enthalten.

Erfindungsgemäß ist demnach in beiden Fällen vorgesehen, dass der erste Spitzenwinkel zwischen den Flanken in deren ununterbrochenen Bereichen der Wellenberge etwa im Bereich von 30° bis 35° liegt, und dass der zweite Spitzenwinkel im Bereich der Einbuchtungen und Wellentäler 30° bis maximal 58° beträgt. Erfindungsgemäß sind somit die Spitzenwinkel relativ klein, woraus ein schlankes Gewindeprofil resultiert, so dass das Furchmoment beim Einschrauben günstig beeinflußt wird, indem das Gewinde leicht unter Materialverdrängung, d. h. im Wesentlichen ohne Spanbildung, ein Gegengewinde in dem jeweiligen Material bildet. Dabei sollte eine Winkeldifferenz zwischen dem ersten und zweiten Spüzenwinkel möglichst klein oder sogar Null sein, d. h. auch der zweite Spitzenwinkel im Bereich der Wellentäler und der Einbuchtungen sollte möglichst klein sein, um durch eine schlanke Profilform das Furchmoment klein zu halten. Vorteilhaft ist hierbei auch ein stetiger, praktisch kantenfreier Übergang zwischen den Gewindeflanken und den Einbuchtungen.

Zusätzlich dazu ist erfindungsgemäß vorgesehen, die Größe der Amplitude der wellenförmigen Gewindekante in Abhängigkeit von dem jeweiligen Verwendungszweck der Schraube zu variieren. Für eine Verwendung zum Einschrauben in weichere Materialien, wie Holz oder andere Faserstoffe und Verbundwerkstoffe, beträgt die Amplitude der wellenförmigen Gewindekante etwa das 0,2- bis 0,4-fache der Gewinde-Höhe. Je weicher bzw. nachgiebiger das Material ist, desto größer kann die Amplitude sein (und umgekehrt). Für eine Verwendung zum Einschrauben in härtere Materialien, insbesondere Kunststoffe oder Metalle, ist vorgesehen, dass die Amplitude der Gewindekante etwa das 0,05 bis 0,15-fache der Gewinde-Höhe beträgt. Je härter und widerstandsfähiger das Material ist, desto kleiner sollte die Amplitude sein (und umgekehrt).

Eine weitere erfindungsgemäße Maßnahme betrifft die radial gemessene Tiefe der Einbuchtungen. Für eine Verwendung zum Einschrauben in weichere Materialien ergibt sich diese Tiefe aus der Gewinde-Höhe multipliziert mit einem Faktor größer/gleich 0,8. Dieser Faktor kann mit Vorteil etwa 0,8 betragen, aber auch gegen 1,0 gehen. Für härtere Materialien beträgt die radiale Tiefe der Einbuchtungen vorzugsweise etwa das 0,2 bis 0,3-fache der Gewinde-Höhe.

Einen weiteren Einfluß auf die Schraubeneigenschaften hat auch die Anzahl von Wellenbergen und Wellentälern pro Gewindegang, d. h. der Umfangswinkelabstand bzw. Teilungswinkel der Wellenberge. Für eine Verwendung zum Einschrauben in weichere Materialien sollte der Teilungswinkel im Bereich von 30° bis 45 ° liegen, woraus eine Anzahl n von 8 bis 12 Wellenbergen bzw. Wellentälern pro Gewindegang (360°) resultiert. Für eine Verwendung bei härteren Materialien liegt der Teilungswinkel im Bereich von 15° bis 24°, woraus sich eine Anzahl n von 15 bis 24 Wellenbergen bzw. - tälem ergibt.

In Verbindung mit den erläuterten Erfindungsmerkmalen ist es vorteilhaft, wenn das konkret eingängig ausgeführte Gewinde eine Steigung aufweist, die etwa das 0,5-fache des äußeren Gewindedurchmessers (Schrauben-Nenndurchmesser) beträgt. Hierdurch wird ein vergrößerter Vorschub zum schnelleren Einschrauben erreicht. Dennoch ist erfindungsgemäß ein hohes Lösemoment zur dauerhaften Verschraubungs-Vorspannung gewährleistet.

Anhand von mehreren, in der Zeichnung veranschaulichten Ausführungsbeispielen soll die Erfindung genauer erläutert werden. Dabei zeigen:
- Fig. 1: eine stark vergrößerte, leicht perspektivische Seitenansicht einer erfindungsgemäßen Schraube,
- Fig. 2: einen weiter vergrößerten Querschnitt in der Ebene II-II gemäß Fig. 1, und zwar in einer ersten Ausführungsform zur Verwendung bei weicheren Materialien,
- Fig. 3: eine Perspektivdarstellung einer Abwicklung des Gewindes,
- Fig. 4: einen vergrößerten Querschnitt durch das Gewinde im Bereich eines Wellentales in der Ebene IV-IV gemäß Fig. 2,
- Fig. 5: eine Darstellung analog zu Fig. 4 in einer Ausführungsaltemative,
- Fig. 6: eine Darstellung analog zu Fig. 2 einer weiteren Ausführung für weichere Materialien,
- Fig. 7: eine dritte Ausführung ebenfalls für weichere Materialien in einer Darstellung analog zu Fig. 2 bzw. 5, jedoch mit asymmetrischen Einbuchtungen,
- Fig. 8: eine zur Verwendung bei härteren Materialien konzipierte Ausführungsform in einer Darstellung analog zu u.a. Fig. 2 mit symmetrischen Einbuchtungen und
- Fig. 9: eine Ausführung analog zu Fig. 8, jedoch mit asymmetrischen Einbuchtungen.

In den verschiedenen Figuren der Zeichnung sind gleiche Teile stets mit den gleichen Bezugszeichen versehen und werden daher in der Regel auch jeweils nur einmal beschrieben.

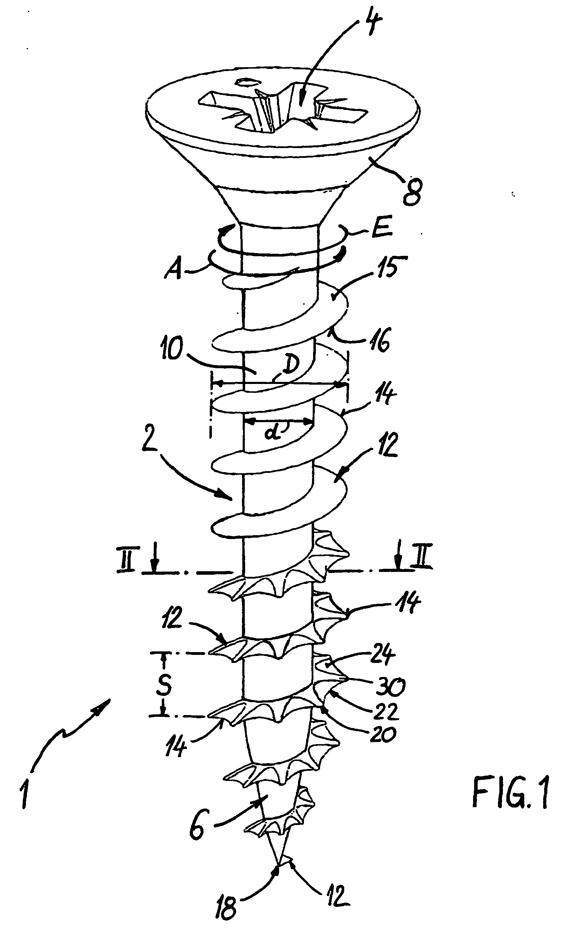

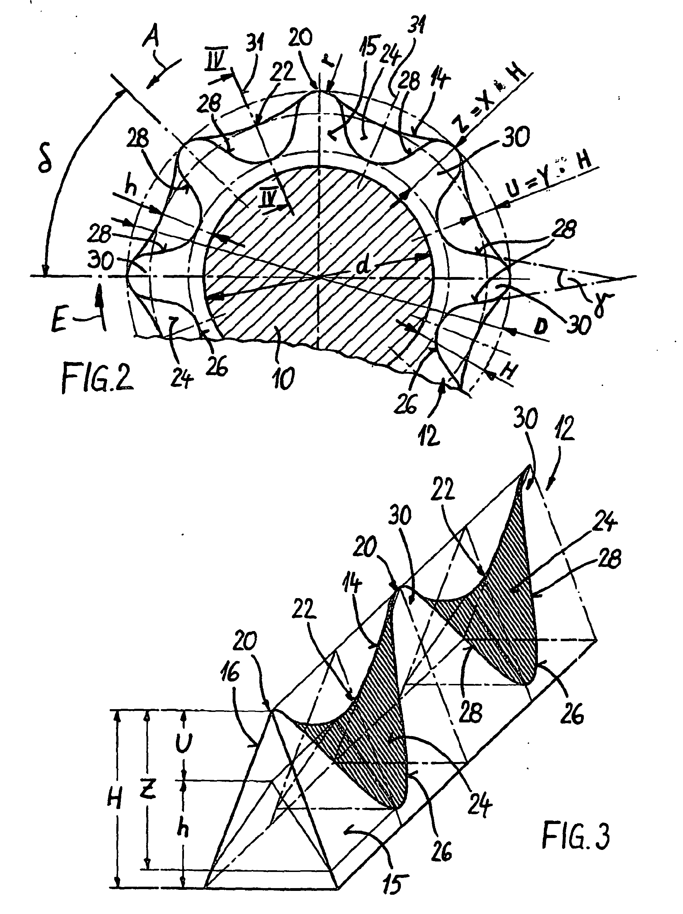

Wie sich zunächst aus Fig. 1 ergibt, besteht eine erfindungsgemäße Schraube 1 aus einem Gewindeschaft 2 mit einem einendigen Kraftangriff 4 zur Drehmomentübertragung und einer gegenüberliegenden Schraubenspitze 6. Im dargestellten Beispiel ist der Kraftangriff 4 in Form einer Vertiefung als Innenkraftangriff - hier rein beispielhaft als Kreuzschlitz - in einem als Senkkopf ausgebildeten Schraubenkopf 8 ausgebildet. Der Gewindeschaft 2 besteht aus einem vorzugsweise zylindrischen Schaftkem 10 mit einem Kerndurchmesser d (siehe auch Fig. 2) und einem selbst-gewindeformenden, insbesondere eingängigen Gewinde 12 mit einem äußeren Gewindedurchmesser (Schrauben-Nenndurchmesser) D (Fig. 1 und 2), wobei dieses Gewinde 12 als eine (nur eine) schraubenlinienförmig zumindest über einen Teil des Schaftkems 10 und über die Schraubenspitze 6 verlaufende Erhebung ausgebildet ist, die von zwei in einer äußeren Gewindekante 14 zusammenlaufenden, vorzugsweise in radialer Richtung jeweils etwa geradlinig verlaufenden Flanken 15, 16 begrenzt ist. Das Gewinde 12 verläuft hierbei jedenfalls bis zum vorderen, spitzen Ende 18 der Schraubenspitze 6. Im dargestellten Beispiel verläuft es über den gesamten Schaftkem 10 hinweg nahezu bis zum Schraubenkopf 8 (sogenanntes Vollgewinde). Die Schraube 1 kann aber auch mit Teilgewinde, d. h. mit einem gewindefreien Schaftabschnitt im Anschluß an den Schraubenkopf 8 ausgebildet sein. Üblicherweise ist das Gewinde 12 als Rechtsgewinde ausgebildet, so dass eine Einschraubrichtung (Pfeile E) dem Uhrzeigersinn entspricht. Die entgegengesetzte Ausschraubrichtung ist mit Pfeilen A eingezeichnet. Im Bereich der Schraubenspitze 6 verjüngt sich der Kem 10 etwa konisch vom Kemdurchmesser d bis zum spitzen Ende 18.

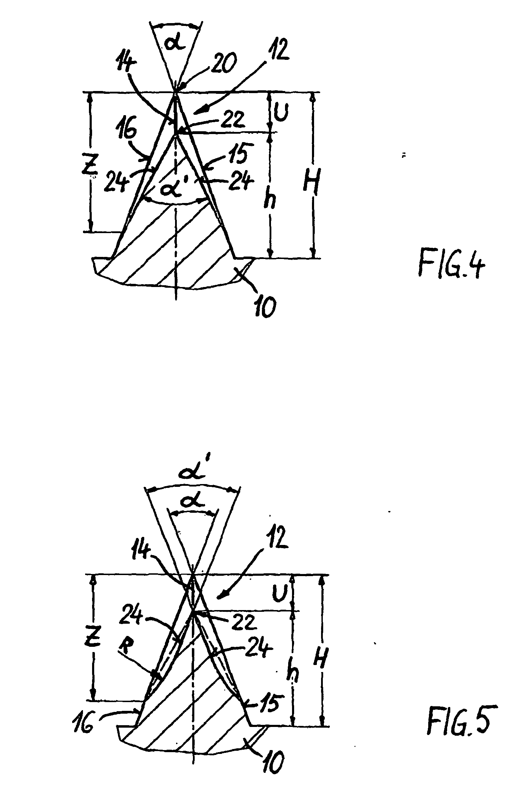

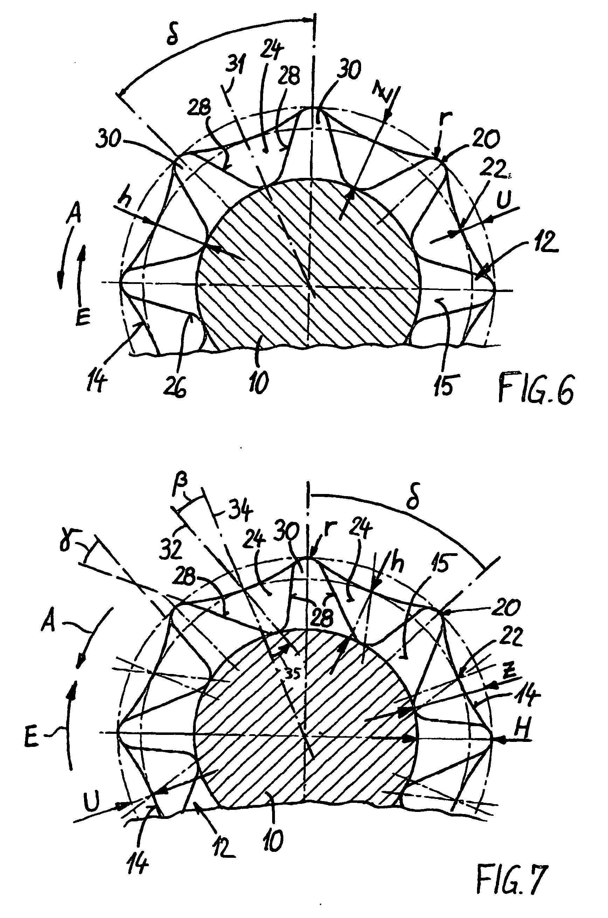

Wie sich aus den Figuren 2 bis 9 ergibt, verläuft die äußere Gewindekante 14 - zumindest in einem Teilbereich des Gewindes 12 - in radialer Richtung mit einer bestimmten Amplitude U wellenförmig zwischen Wellenbergen 20 und Wellentälern 22. im Bereich der Wellenberge 20 weist das Gewinde 12 eine radial zwischen dem Schaftkern 10 und der Gewindekante 14 gemessene Höhe H auf. Diese Höhe H ist im Bereich der Wellentäler 22 um die Amplitude U auf eine Höhe h reduziert. Daraus folgt: U = H - h. Das Gewinde 12 weist zumindest im Bereich einer der Flanken 15, 16, und zwar insbesondere zumindest im Bereich der der Schraubenspitze 6 bzw. 18 zugekehrten Flanke 16, im Bereich der Wellentäler 22 der Gewindekante 14 Einbuchtungen 24 auf, die die Oberfläche der jeweiligen Flanke 15, 16 unterbrechen, und deren äußere radiale Begrenzung die Gewindekante 14 ist. Diese Einbuchtungen 24 weisen Oberflächen auf, die in radialen Richtungen geradlinig (Fig. 3, 4) oder konkav (siehe Fig. 5) sowie in Umfangs- bzw. Drehrichtung der Schraube konkav gewölbt verlaufen. Insbesondere den Fig. 3 bis 5 ist weiterhin zu entnehmen, dass das Gewinde 12 in den nicht von Einbuchtungen 24 unterbrochenen Bereichen der Wellenberge 20 der Gewindekante 14 jeweils einen bestimmten, zwischen den in radialer Richtung im Wesentlichen geradlinig verlaufenden Flanken 15, 16 gebildeten, ersten Spitzenwinkel α und in den tiefsten Bereichen der Wellentäler 22 der Gewindekante 14 im Bereich der Einbuchtungen 24 einen zweiten Spitzenwinkel α' aufweist.

Erfindungsgemäß liegt der erste Spitzenwinkel α zwischen den ununterbrochenen Flanken 15, 16 etwa im Bereich von 30° bis 35°. Dabei beträgt der zweite Spitzenwinkel α' im Bereich der Einbuchtungen 24 30° bis maximal 58°.

Bei einer ersten Ausführungsart gemäß Fig. 3 und 4 verlaufen die Oberflächen der Einbuchtungen 24 in radialer Richtung gesehen im Wesentlichen geradlinig. Daraus ergibt sich, dass der zweite Spitzenwinkel α' jedenfalls größer als der erste Spitzenwinkel α ist; der zweite Spitzenwinkel α' sollte dann etwa 35° bis maximal 58° betragen, dabei aber im Interesse eines geringen Furchmomentes möglichst klein sein.

Bei der vorteilhaften Ausführungsart nach Fig. 5 sind die Oberflächen der Einbuchtungen 24 auch in radialer Richtung jeweils zumindest über einen Teil ihrer radialen Erstreckung konkav gekrümmt, was beispielhaft mit einem Krümmungsradius R angedeutet ist. Es muss sich aber nicht um eine Kreisbogenkrümmung handeln, sondem es sind beliebige, z. B. parabelförmige Kurvenformen möglich. Diese Ausführung hat den Vorteil, dass der sich an der Gewindekante 14 im Wellental 22 effektiv zwischen angelegten Tangenten ergebende zweite Spitzenwinkel α' durch geeignete Krümmungsform noch deutlich reduziert werden kann. Gemäß Fig. 5 sind α und α' etwa gleich groß; sie können beispielsweise beide im Bereich von etwa 30° bis 35° liegen.

Ein weiterer erfindungsgemäßen Aspekt ist die Größe der Amplitude U der wellenförmigen Gewindekante 14. Für eine Auslegung der Schraube 1 für eine Verwendung zum Einschrauben in weichere Materialien, wie Holz oder dergleichen, sollte die Amplitude U etwa das 0,2- bis 0,4- fache der Gewinde-Höhe H betragen. Mathematisch kann dies durch die Beziehung U = Y · H ausgedrückt werden mit Y = 0,2 bis 0,4. Hierzu wird auf die in Fig. 2 bis 7 veranschaulichten Ausführungen verwiesen.

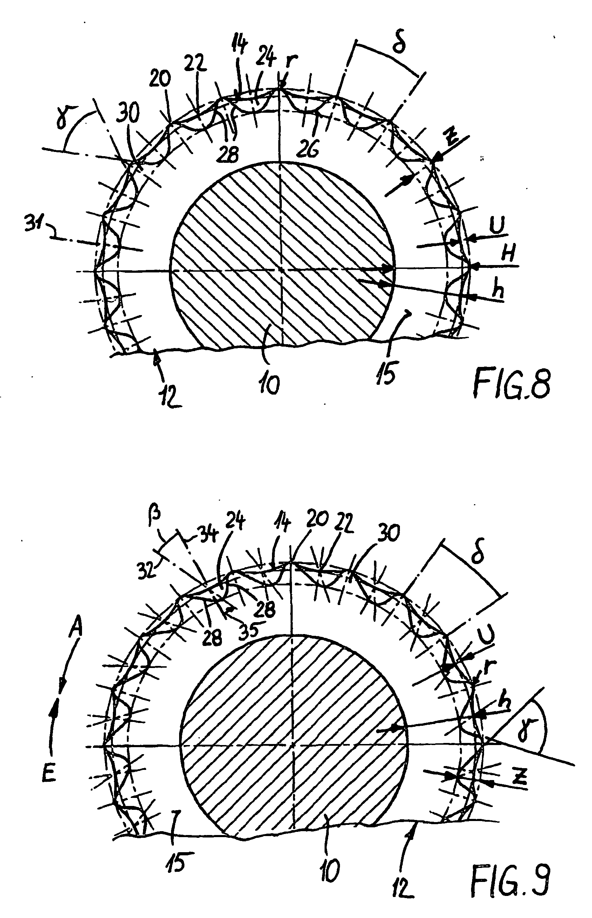

Dem gegenüber beträgt die Amplitude U für eine Verwendung der Schraube 1 zum Einschrauben in härtere und widerstandsfähigere Materialien, insbesondere Kunststoffe oder Metalle, etwa das 0,05- bis 0,15- fache der Höhe H, d. h. in der genannten Beziehung U = Y · H beträgt Y = 0,05 bis 0,15. Dazu wird auf die Ausführungen gemäß Fig. 8 und 9 verwiesen.

Wie sich weiter aus den Zeichnungsfiguren, insbesondere Fig. 2 bis 5 -ergibt, weisen die Einbuchtungen 24 jeweils eine ausgehend von dem von den Wellenbergen 20 der Gewindekante 14 bestimmten Gewinde-Durchmesser D in radialer Richtung nach innen gemessene Tiefe Z auf, die jedenfalls zumindest geringfügig kleiner als die Höhe H des Gewindes 12 ist. Dadurch weist das Gewinde 12 in dem Bereich seines Gewindefusses über eine bestimmte Höhe H-Z hinweg ununterbrochene Flanken 15, 16 auf.

Gemäß einem weiteren Erfindungsaspekt wird diese Tiefe Z der Einbuchtungen 24 ebenfalls in Anpassung an die Verwendung der Schraube 1 ausgelegt. Für weichere Materialien soll die Tiefe Z der Einbuchtungen 24 mindestens das 0,8- fache der Gewinde-Höhe H betragen; es gilt Z = X · H mit X ≥ 0,8. Dabei kann auch Z gegen H gehen, vgl. die Ausführungen gemäß Fig. 6 und 7.

Bei Ausführungen für härtere Materialien, vergleiche Fig. 8 und 9, beträgt in der genannten Beziehung Z=X · H der Faktor X etwa 0,2 bis 0,3.

Noch ein weiterer Aspekt bezieht sich auf die Anzahl von Wellenbergen 20 bzw. Wellentälern 22 pro Gewindegang von 360°. Die Wellenberge 20 (entsprechend natürlich auch die Wellentäler 22) sind in Umfangsrichtung jeweils um einen Teilungswinkel δ voneinander beabstandet. Hierbei ist nun vorgesehen, dass für eine Verwendung für weichere Materialien der Teilungswinkel δ im Bereich von 30° bis 45° liegt. Nach der Beziehung n = 360°/ δ ergibt sich für die Anzahl von Wellenbergen bzw. Wellentälern n = 8 bis 12 für weichere Materialien. Für eine Auslegung der Schraube 1 zur Verwendung bei härteren Materialien liegt der Teilungswinkel δ im Bereich von 15° bis 24°, so dass eine Anzahl n von 15 bis 24 Wellenbergen 20 bzw. Wellentälern 22 pro Gewindegang vorhanden ist.

Die Einbuchtungen 24 sind jeweils durch eine Grenzlinie 26 von der angrenzenden Fläche der jeweiligen Flanke 15, 16 abgegrenzt. Dabei hat diese Grenzlinie 26 im Wesentlichen die Form einer Parabel mit seitlichen, etwa V-förmigen Grenzabschnitten 28. Durch diese Kontur ist im Bereich der Wellenberge 20 jeweils zwischen zwei benachbarten Einbuchtungen 24 ein Gewindeabschnitt 30 mit vollständigen Flanken 15, 16 gebildet. Die beidseitig eines jede solchen vollständigen Gewindeabschnittes 30 liegenden Grenzabschnitte 28 der benachbarten Einbuchtungen 24 schließen hierbei einen Winkel γ ein, der im Bereich von 30° bis 90° liegen sollte, wobei die Grenzabschnitte 28 im Bereich jedes Wellenberges 20 über eine Verrundung mit einem Radius r = (0,1 bis 0,3) • H ineinander übergehen.

Bei den Ausführungen gemäß Fig. 2 , 6 und 8 sind die Einbuchtungen jeweils derart symmetrisch ausgebildet, dass ihre seitlichen Grenzabschnitte 28 in Eindrehrichtung E und Ausdrehrichtung A der Schraube jeweils im gleichen Winkel zu einer radialen Achse 31 der Einbuchtung 24 verlaufen.

Dem gegenüber ist bei den Ausführungen gemäß Fig. 7 und 9 vorgesehen, dass jede Einbuchtung derart asymmetrisch ausgebildet ist, dass die in Eindrehrichtung E vordere Grenzlinie 28 steiler als die hintere Grenzlinie 28 verläuft, wobei eine Achse 32 der Einbuchtung 24 zu einer radialen Mittellinie 34 des Wellentales 22 der Gewindekante 14 um einen spitzen Winkel β in Eindrehrichtung E versetzt ist (siehe dazu den in Fig. 7 und 9 jeweils eingezeichneten Pfeil 35). Der Winkel β sollte etwa im Bereich von 10° bis 25° liegen.

In vorteilhafter Ausgestaltung der erfindungsgemäßen Schraube 1 ist das gemäß Fig. 1 bis zum Ende 18 der Schraubenspitze 6 verlaufende Gewinde 12 ausgehend vom Ende 18 und über die Schraubenspitze 6 hinweg sowie mindestens über den ersten sich im Bereich des zylindrischen Kems 10 anschließenden Gewindegang mit den Einbuchtungen 24 und der wellenförmigen Gewindekante 14 ausgeführt. Weiterhin sind bevorzugt auf beiden Flanken 15 und 16 des Gewindes 12 einander axial gegenüberliegend die Einbuchtungen 24 ausgebildet. Im Bereich der Schraubenspitze 6 zu deren Ende 18 hin kann der Abstand der Einbuchtungen 24 bzw. der vollständigen Gewindeabschnitte 30 sukzessive immer kleiner werden.

Wie sich noch aus Fig. 1 ergibt, ist das Gewinde 12 bevorzugt als konkret eingängiges Gewinde mit einer Steigung S ausgeführt, die aufgrund der erfindungsgemäßen Merkmale mit mindestens etwa dem 0,5-fachen des Gewinde-Durchmessers D relativ groß sein kann. Es ist weiterhin vorteilhaft, wenn die Schraubenspitze 6 als "vorlochende Spitze" ausgebildet ist. Dies wird in gewissem Umfang bereits allein durch die beschriebene Ausgestaltung des bis zum spitzen Ende 18 verlaufenden Gewindes 12 erreicht, da hierdurch die Spitze 6 bei Rotation als eine Art reibendes Werkzeug wirkt. Zusätzlich kann der Kem der Spitze 6 beispielsweise nicht dargestellte, z. B. axiale, rippenförmige Fräselemente (Fräsrippen) aufweisen.

Abschließend sei bemerkt, dass sich in der Praxis insbesondere fertigungsbedingte Abweichungen von den hier beschriebenen und dargestellten, idealen Ausgestaltungsmerkmalen ergeben können. Dies gilt vor allem für den Verlauf der Gewindekante 14 und/oder der Grenzlinien 26, der von der sinusartigen Darstellung abweichend auch z. B. mit etwa geradlinigen Abschnitten im Bereich der Wellentäler und/oder mit unregelmäßigem Verlauf entstehen kann. Ferner kann die Gewindekante 14 anstatt mit einer scharfen, messerschneidenartigen Spitze zwischen Flanken auch mit einer schmalen Fläche oder mit einem kleinen Krümmungsradius gebildet sein.

## Patentansprüche

1. Schraube (1) mit einem Gewindeschaft (2) mit einem Kraftangriff (4) zur Drehmomentübertragung und einer Schraubenspitze (6), wobei der Gewindeschaft (2) aus einem Schaftkem (10) und einem selbst-gewindeformenden Gewinde (12) besteht und das Gewinde (12) als schraubenlinienförmig über den Schaftkem (10) verlaufende, von zwei in einer äußeren Gewindekante (14) zusammenlaufenden Flanken (15, 16) begrenzte Erhebung mit einer radialen Höhe (H) ausgebildet ist, wobei zumindest in einem Teilbereich des Gewindes (12) die äußere Gewindekante (14) in radialer Richtung mit einer Amplitude (U) wellenförmig zwischen Wellenbergen (20) mit der Höhe (H) und Wellentälern (22) mit einer um die Amplitude (U) reduzierten Höhe (h) verläuft und das Gewinde (12) zumindest im Bereich einer seiner Flanken (15/16) im Bereich der Wellentäler (22) der Gewindekante (14) die Oberfläche der Flanke (15/16) unterbrechende Einbuchtungen (24) aufweist, deren äußere Begrenzung die Gewindekante (14) ist, wobei das Gewinde (12) in den nicht von Einbuchtungen (24) unterbrochenen Bereichen der Wellenberge (20) der Gewindekante (14) jeweils einen bestimmten, zwischen den Flanken (15/16) gebildeten ersten Spitzenwinkel (α) und in den tiefsten Bereichen der Wellentäler (22) der Gewindekante (14) einen zweiten Spitzenwinkel (α') aufweist, und wobei die Einbuchtungen (24) jeweils eine ausgehend von einem von den Wellenbergen (20) der Gewindekante (14) bestimmten Durchmesser (D) in radialer Richtung nach innen gemessene Tiefe (Z) aufweisen, die kleiner als die Höhe (H) des Gewindes (12) ist,
**dadurch gekennzeichnet, dass** der erste Spitzenwinkel (α) zwischen den Flanken (15,16) etwa im Bereich von 30° bis 35° liegt, wobei der zweite Spitzenwinkel (α') 30° bis maximal 58° beträgt, und dass für eine Verwendung zum Einschrauben in weichere Materialien, wie Holz oder holzähnliche Werkstoffe, einerseits die Amplitude (U) der wellenförmigen Gewindekante (14) etwa das 0,2 bis 0,4- fache der Gewinde-Höhe (H) und andererseits die radiale Tiefe (Z) der Einbuchtungen (24) etwa das 0,8- bis 1-fache der Gewinde-Höhe (H) betragen.

2. Schraube nach Anspruch 1,
**dadurch gekennzeichnet, dass** die Wellenberge (20) in Umfangsrichtung jeweils um einen Teilungswinkel (δ) voneinander beabstandet sind, der für die Verwendung zum Einschrauben in weichere Materialien, wie Holz oder holzähnliche Werkstoffe, im Bereich von 30° bis 45° liegt.

3. Schraube (1) mit einem Gewindeschaft (2) mit einem Kraftangriff (4) zur Drehmomentübertragung und einer Schraubenspitze (6), wobei der Gewindeschaft (2) aus einem Schaftkem (10) und einem selbst-gewindeformenden Gewinde (12) besteht und das Gewinde (12) als schraubenlinienförmig über den Schaftkem (10) verlaufende, von zwei in einer äußeren Gewindekante (14) zusammenlaufenden Flanken (15, 16) begrenzte Erhebung mit einer radialen Höhe (H) ausgebildet ist, wobei zumindest in einem Teilbereich des Gewindes (12) die äußere Gewindekante (14) in radialer Richtung mit einer Amplitude (U) wellenförmig zwischen Wellenbergen (20) mit der Höhe (H) und Wellentälern (22) mit einer um die Amplitude (U) reduzierten Höhe (h) verläuft und das Gewinde (12) zumindest im Bereich einer seiner Flanken (15/16) im Bereich der Wellentäler (22) der Gewindekante (14) die Oberfläche der Flanke (15/16) unterbrechende Einbuchtungen (24) aufweist, deren äußere Begrenzung die Gewindekante (14) ist, wobei das Gewinde (12) in den nicht von Einbuchtungen (24) unterbrochenen Bereichen der Wellenberge (20) der Gewindekante (14) jeweils einen bestimmten, zwischen den Flanken (15/16) gebildeten ersten Spitzenwinkel (α) und in den tiefsten Bereichen der Wellentäler (22) der Gewindekante (14) einen zweiten Spitzenwinkel (α') aufweist, und wobei die Einbuchtungen (24) jeweils eine ausgehend von einem von den Wellenbergen (20) der Gewindekante (14) bestimmten Durchmesser (D) in radialer Richtung nach innen gemessene Tiefe (Z) aufweisen, die kleiner als die Höhe (H) des Gewindes (12) ist,
**dadurch gekennzeichnet, dass** der erste Spitzenwinkel (α) zwischen den Flanken (15,16) etwa im Bereich von 30° bis 35° liegt, wobei der zweite Spitzenwinkel (α') 30° bis maximal 58° beträgt, und dass für eine Verwendung zum Einschrauben in härtere bzw. widerstandsfähigere Materialien, insbesondere Kunststoffe oder Metalle, einerseits die Amplitude (U) der wellenförmigen Gewindekante (14) etwa das 0,05-bis 0,15- fache der Gewinde-Höhe (H) und andererseits die radiale Tiefe (Z) der Einbuchtungen (24) etwa das 0,2 bis 0,3-fache der Gewinde-Höhe (H) betragen.

4. Schraube nach Anspruch 3,
**dadurch gekennzeichnet, dass**
die Wellenberge (20) in Umfangsrichtung jeweils um einen Teilungswinkel (δ) voneinander beabstandet sind, der für die Verwendung zum Einschrauben in härtere bzw. widerstandsfähigere Materialien, insbesondere Kunststoffe oder Metalle, im Bereich von 15° bis 24° liegt.

5. Schraube nach einem der Ansprüche 1 bis 4,
**dadurch gekennzeichnet, dass** die Einbuchtungen (24) in radialer Richtung gesehen im Wesentlichen geradlinig verlaufende Oberflächen aufweisen, wobei der zweite Spitzenwinkel (α') größer als der erste Spitzenwinkel (α) ist und insbesondere etwa im Bereich von 35° bis maximal 58° liegt.

6. Schraube nach einem der Ansprüche 1 bis 4,
**dadurch gekennzeichnet, dass** die Einbuchtungen (24) in radialer Richtung gesehen zumindest abschnittsweise konkave Oberflächen aufweisen, wobei der Spitzenwinkel (α') etwa in der Größenordnung des ersten Spitzenwinkels (α) liegt.

7. Schraube nach einem der Ansprüche 1 bis 6,
**dadurch gekennzeichnet, dass** die Einbuchtungen (24) jeweils durch eine Grenzlinie (26) von der angrenzenden Fläche der Flanke (15, 16) begrenzt sind, wobei die Grenzlinie (26) im Wesentlichen die Form einer Parabel mit seitlichen, etwa V-förmigen Grenzabschnitten (28) hat, wobei im Bereich der Wellenberge (20) jeweils zwischen zwei benachbarten Einbuchtungen (24) ein bezüglich seiner Flanken (15, 16) ununterbrochener Gewindeabschnitt (30) gebildet ist und die beidseitig dieses Gewindeabschnitts (30) liegenden Grenzabschnitte (28) einen Winkel (γ) einschließen, der im Bereich von 30° bis 90° liegt.

8. Schraube nach Anspruch 7,
**dadurch gekennzeichnet, dass** dieGrenzabschnitte(28)im Bereich jedes Wellenberges (20) über eine Verrundung mit einem Radius (r) ineinander übergehen, der etwa dem 0,1- bis 0,3- fachen der Gewinde-Höhe (H) entspricht.

9. Schraube nach Anspruch 7 oder 8,
**dadurch gekennzeichnet, dass** jede Einbuchtung (24) derart symmetrisch ausgebildet ist, dass ihre Grenzabschnitte (28) in Ein- und Ausdrehrichtung (E/A) der Schraube jeweils im gleichen Winkel zu einer radialen Achse (31) der Einbuchtung (24) verläuft.

10. Schraube nach Anspruch 7 oder 8,
**dadurch gekennzeichnet, dass** jede Einbuchtung (24) derart asymmetrisch ausgebildet ist, dass die in Eindrehrichtung (E) vordere Grenzlinie (28) steiler als die hintere Grenzlinie (28) verläuft, wobei eine Achse (32) der Einbuchtung (24) zu einer radialen Mittellinie (34) des Wellentales (22) der Gewindekante (14) um einen spitzen Winkel (β) in Eindrehrichtung (E) versetzt ist, wobei dieser Winkel (β) vorzugsweise etwa in der Größenordnung von 10° bis 25° liegt.

11. Schraube nach einem der Ansprüche 1 bis 10,
**dadurch gekennzeichnet, dass** das Gewinde (12) bis zum Ende (18) der Schraubenspitze (6) verläuft, wobei das Gewinde (12) ausgehend von der Schraubenspitze (6) mindestens über den ersten sich anschließenden Gewindegang mit den Einbuchtungen (24) und der wellenförmigen Gewindekante (14) ausgeführt ist.

12. Schraube nach einem der Ansprüche 1 bis 11,
**dadurch gekennzeichnet, dass** die Einbuchtungen (24) auf beiden Flanken (15, 16) des Gewindes (12) einander gegenüberliegend ausgebildet sind.

13. Schraube nach einem der Ansprüche 1 bis 12,
**dadurch gekennzeichnet, dass** der Abstand der Einbuchtungen (24) im Bereich der Schaubenspitze (6) zu deren Ende (18) hin kleiner wird.

14. Schraube nach einem der Ansprüche 1 bis 13,
**dadurch gekennzeichnet, dass** das eingängig ausgeführte Gewinde (12) eine Steigung (S) aufweist, die etwa das 0,5- fache des äußeren Gewinde-Durchmessers (D) trägt.

15. Schraube nach einem der Ansprüche 1 bis 14,
**dadurch gekennzeichnet, dass** die Schraubenspitze (6) mit selbst-vorlochenden Eigenschaften ausgebildet ist.

## Claims

1. Screw fastener (1) comprising a threaded shank (2) having a force application means (4) for torque transmission and a screw fastener point (6), the threaded shank (2) consisting of a shank core (10) and a self-tapping thread (12), and the thread (12) being configured as a raised portion which runs helically over the shank core (10) and is delimited by two flanks (15, 16) meeting in an outer thread edge (14) and the thread defining a radial height (H), the outer thread edge (14), at least in a portion of the thread (12), running in a wavelike manner in the radial direction with an amplitude (U) between wave crests (20) having the height (H) and wave troughs (22) having a height (h) reduced by the amplitude (U), and the thread (12), at least in the region of one of its flanks (15/16), having niches (24) in the region of the wave troughs (22) of the thread edge (14), wherein the niches interrupt the surface of the flank (15/16) and their outer boundary is the thread edge (14), the thread (12) having in each case a specific first apex angle (α), formed between the flanks (15/16), in those regions of the wave crests (20) of the thread edge (14) which are not interrupted by niches (24), and a second apex angle (α') in the deepest regions of the wave troughs (22) of the thread edge (14), and wherein the niches (24), starting from a diameter (D) determined by one of the wave crests (20) of the thread edge (14), each have a depth (Z) which is measured inward in the radial direction and is smaller than the height (H) of the thread (12), **characterised in that** the first apex angle (α) measured between the flanks (15, 16) is approximately within the range of 30° to 35°, the second apex angle (α') being 30° to at most 58°, and **in that**, for use for inserting into relatively soft materials, including wood and wood-like materials, the amplitude (U) of the wavelike thread edge (14) is, on the one hand, about 0.2 to 0.4 times the thread height (H) and the radial depth (Z) of the niches (24) is, on the other hand, about 0.8 to 1 times the thread height (H).

2. Screw fastener according to claim 1, **characterised in that** the wave crests (20) are at a distance from one another in the circumferential direction in each case by an angular pitch (σ) which, for use for inserting into relatively soft materials, including wood or wood-like materials, is within the range of 30° to 45°.

3. Screw fastener (1) comprising a threaded shank (2) having a force application means (4) for torque transmission and a screw fastener point (6), the threaded shank (2) consisting of a shank core (10) and a self-tapping thread (12), and the thread (12) being configured as a raised portion which runs helically over the shank core (10) and is delimited by two flanks (15, 16) meeting in an outer thread edge (14) and the thread defining a radial height (H), the outer thread edge (14), at least in a portion of the thread (12), running in a wavelike manner in the radial direction with an amplitude (U) between wave crests (20) having the height (H) and wave troughs (22) having a height (h) reduced by the amplitude (U), and the thread (12), at least in the region of one of its flanks (15/16), having niches (24) in the region of the wave troughs (22) of the thread edge (14), wherein the niches interrupt the surface of the flank (15/16) and their outer boundary is the thread edge (14), the thread (12) having in each case a specific first apex angle (α), formed between the flanks (15/16), in those regions of the wave crests (20) of the thread edge (14) which are not interrupted by niches (24), and a second apex angle (α') in the deepest regions of the wave troughs (22) of the thread edge (14), and wherein the niches (24), starting from a diameter (D) determined by one of the wave crests (20) of the thread edge (14), each have a depth (Z) which is measured inward in the radial direction and is smaller than the height (H) of the thread (12), **characterised in that** the first apex angle (α) measured between the flanks (15, 16) is approximately within the range of 30° to 35°, the second apex angle (α') being 30° to at most 58°, and **in that**, for use for inserting into relatively hard or resistant materials, in particular plastics materials or metals, the amplitude (U) of the wavelike thread edge (14) is, on the one hand, about 0.05 to 0.15 times the thread height (H) and the radial depth (Z) of the niches (24) is, on the other hand, about 0.2 to 0.3 times the thread height (H).

4. Screw fastener according to claim 3, **characterised in that** the wave crests (20) are at a distance from one another in the circumferential direction in each case by an angular pitch (σ) which, for use for inserting into relatively hard or resistant materials, in particular plastics materials or metals, is within the range of 15° to 24°.

5. Screw fastener according to any one of claims 1 to 4, **characterised in that** the niches (24) have substantially rectilinearly running surfaces as viewed in the radial direction, the second apex angle (α') being larger than the first apex angle (α) and, in particular, being approximately within the range of 35° to at most 58°.

6. Screw fastener according to any one of claims 1 to 4, **characterised in that** at least portions of the niches (24) have concave surfaces as viewed in the radial direction, the second apex angle (α') being approximately of the order of magnitude of the first apex angle (α).

7. Screw fastener according to any one of claims 1 to 6, **characterised in that** the niches (24) are each separated from the adjoining surface of the flank (15, 16) by a boundary line (26), the boundary line (26) substantially having the shape of a parabola with lateral, approximately V-shaped boundary portions (28), a thread portion (30) which is uninterrupted with regard to its flanks (15, 16) being formed in each case between two adjacent niches (24) in the region of the wave crests (20), and the boundary portions (28) lying on both sides of this thread portion (30) enclosing an angle (γ) which is within the range of 30° to 90°.

8. Screw fastener according to claim 7, **characterised in that** the boundary portions (28) in the region of each wave crest (20) merge into one another via a rounded portion having a radius (r) which corresponds approximately to 0.1 to 0.3 times the thread height (H).

9. Screw fastener according to either claim 7 or claim 8, **characterised in that** each niche (24) is configured to be symmetrical in such a way that its boundary portions (28) in each case run at the same angle to a radial axis (31) of the niche (24) in insertion and removal directions (E/A) of the screw.

10. Screw fastener according to either claim 7 or claim 8, **characterised in that** each niche (24) is configured to be asymmetrical in such a way that the front boundary line (28) in the insertion direction (E) is steeper than the rear boundary line (28), an axis (32) of the niche (24) being offset in the insertion direction (E) by an acute angle (β) relative to a radial centre line (34) of the wave trough (22) of the thread edge (14), this angle (β) preferably being approximately within the range of 10° to 25°.

11. Screw fastener according to any one of claims 1 to 10, **characterised in that** the thread (12) runs up to the end (18) of the screw fastener point (6), the thread (12) being configured with the niches (24) and the wavelike thread edge (14) starting from the screw fastener point (6) at least over the first adjoining thread turn.

12. Screw fastener according to any one of claims 1 to 11, **characterised in that** the niches (24) are formed opposite one another on both flanks (15, 16) of the thread (12).

13. Screw fastener according to any one of claims 1 to 12, **characterised in that** the distance between the niches (24) in the region of the screw fastener point (6) becomes smaller toward its end (18).

14. Screw fastener according to any one of claims 1 to 13, **characterised in that** the thread (12) of single-start configuration has a pitch (S) which is about 0.5 times the outer thread diameter (D).

15. Screw fastener according to any one of claims 1 to 14, **characterised in that** the screw fastener point (6) is configured with self-piercing properties.

## Revendications

1. Vis (1) avec une tige de vis filetée (2) possédant un point d'application de force (4) pour transmettre un couple et une pointe de vis (6), dans laquelle la tige de vis filetée (2) se compose d'une âme de tige (10) et d'un filetage autotaraudeur (12) et le filetage (12) est formé par une partie surélevée, d'une hauteur radiale (H), délimitée par deux flancs (15, 16) qui s'étendent en forme d'hélice le long de l'âme de tige (10) et convergent en une arête de filetage extérieure (14), dans laquelle l'arête de filetage extérieure (14), au moins dans une zone partielle du filetage (12), a un profil ondulé dans le sens radial avec une amplitude (U) entre des sommets (20) de hauteur (H) et des creux (22) de hauteur (h) diminuée de l'amplitude (U) et le filetage (12), au moins dans la zone d'un de ses flancs (15/16), présente dans la zone des creux (22) de l'arête de filetage (14) des dépressions (24) qui interrompent la surface du flanc (15/16) et dont la limite extérieure est l'arête de filetage (14), le filetage (12) présentant respectivement, dans les zones des sommets (20) de l'arête de filetage (14) qui ne sont interrompues par les dépressions (24) un premier angle de pointe (α) défini formé entre les flancs (15/16) et un deuxième angle de pointe (α') dans les zones les plus profondes des creux (22) de l'arête de filetage (14) et les dépressions (24) présentant respectivement une profondeur (Z), mesurée à partir d'un diamètre (D) défini par l'un des sommets (20) de l'arête de filetage (14) vers l'intérieur dans le sens radial, qui est inférieure à la hauteur (H) du filetage (12),
**caractérisée en ce que** le premier angle de pointe (α) entre les flancs (15, 16) a une valeur allant de 30° à 35° environ tandis que le deuxième angle de pointe (α') a une valeur allant de 30° jusqu'à un maximum 58° et **en ce que**, pour une application de vissage dans des matériaux plus mous tels que le bois ou des matériaux analogues au bois, d'une part l'amplitude (U) de l'arête de filetage ondulée (14) est égale à environ 0,2 à 0,4 fois la hauteur (H) du filetage et d'autre part la profondeur radiale (Z) des dépressions (24) est égale à environ 0,8 à 1 fois la hauteur (H) du filetage.

2. Vis selon la revendication 1, **caractérisée en ce que** les sommets (20) sont espacés les uns des autres dans le sens de la circonférence d'un pas angulaire (δ) qui, pour l'application au vissage dans des matériaux plus mous tels que le bois ou des matériaux analogues au bois, a une valeur allant de 30° à 45°.

3. Vis (1) avec une tige de vis filetée (2) possédant un point d'application de force (4) pour transmettre un couple et une pointe de vis (6), dans laquelle la tige de vis filetée (2) se compose d'une âme de tige (10) et d'un filetage autotaraudeur (12) et le filetage (12) est formé par une partie surélevée, d'une hauteur radiale (H), délimitée par deux flancs (15, 16) qui s'étendent en forme d'hélice le long de l'âme de tige (10) et convergent en une arête de filetage extérieure (14), dans laquelle l'arête de filetage extérieure (14), au moins dans une zone partielle du filetage (12), a un profil ondulé dans le sens radial avec une amplitude (U) entre des sommets (20) de hauteur (H) et des creux (22) de hauteur (h) diminuée de l'amplitude (U) et le filetage (12), au moins dans la zone d'un de ses flancs (15/16), présente dans la zone des creux (22) de l'arête de filetage (14) des dépressions (24) qui interrompent la surface du flanc (15/16) et dont la limite extérieure est l'arête de filetage (14), le filetage (12) présentant respectivement, dans les zones des sommets (20) de l'arête de filetage (14) qui ne sont interrompues par les dépressions (24) un premier angle de pointe (α) défini formé entre les flancs (15/16) et un deuxième angle de pointe (α') dans les zones les plus profondes des creux (22) de l'arête de filetage (14) et les dépressions (24) présentant respectivement une profondeur (Z), mesurée à partir d'un diamètre (D) défini par l'un des sommets (20) de l'arête de filetage (14) vers l'intérieur dans le sens radial, qui est inférieure à la hauteur (H) du filetage (12),
**caractérisée en ce que** le premier angle de pointe (α) entre les flancs (15, 16) a une valeur allant de 30° à 35° environ tandis que le deuxième angle de pointe (α') a une valeur allant de 30° jusqu'à un maximum 58° et **en ce que**, pour une application de vissage dans des matériaux plus durs ou plus résistants, en particulier des matières plastiques ou des métaux, d'une part l'amplitude (U) de l'arête de filetage ondulée (14) est égale à environ 0,05 à 0,15 fois la hauteur (H) du filetage et d'autre part la profondeur radiale (Z) des dépressions (24) est égale à environ 0,2 à 0,3 fois la hauteur (H) du filetage.

4. Vis selon la revendication 3, **caractérisée en ce que** les sommets (20) sont espacés les uns des autres dans le sens de la circonférence d'un pas angulaire (δ) qui, pour l'application au vissage dans des matériaux plus durs ou plus résistants, en particulier des matières plastiques ou des métaux, a une valeur allant de 15° à 24°.

5. Vis selon l'une des revendications 1 à 4, **caractérisée en ce que** les dépressions (24), vues dans le sens radial, présentent des surfaces qui ont un profil sensiblement rectiligne, le deuxième angle de pointe (α') étant plus grand que le premier angle de pointe (α) et ayant notamment une valeur allant de 35° à un maximum de 58°.

6. Vis selon l'une des revendications 1 à 4, **caractérisée en ce que** les dépressions (24), vues dans le sens radial, présentent des surfaces concaves au moins par segments, l'angle de pointe (α') étant à peu près du même ordre de grandeur que le premier angle de pointe (α).

7. Vis selon l'une des revendications 1 à 6, **caractérisée en ce que** les dépressions (24) dont délimitées chacune par une ligne limite (26) de la surface adjacente du flanc (15, 16), la ligne limite (26) ayant sensiblement la forme d'une parabole avec des segments limites latéraux à peu près en forme de V (28), dans laquelle, dans la zone de chaque sommet (20) entre deux dépressions (24) voisines, un segment de filetage (30) ininterrompu au niveau de ses flancs (15, 16) et les segments limites (28) situés des deux côtés de ce segment de filetage (30) font entre eux un angle (γ) d'une valeur allant de 30° à 90°.

8. Vis selon la revendication 7, **caractérisée en ce que** les segments limites (28) se raccordent dans la zone de chaque sommet (20) par un arrondi ayant un rayon (r) d'une valeur égale à environ 0,1 à 0,3 fois la hauteur (H) du filetage.

9. Vis selon la revendication 7 ou la revendication 8, **caractérisée en ce que** chaque dépression (24) est réalisée avec une forme symétrique telle que, dans le sens de vissage et de dévissage (E/A) de la vis, ses segments limites (28) font chacun un angle identique par rapport à un axe radial (31) de la dépression (24).

10. Vis selon la revendication 7 ou la revendication 8, **caractérisée en ce que** chaque dépression (24) est réalisée avec une forme asymétrique telle que la ligne limite (28) qui se trouve à l'avant dans le sens de vissage (E) a une inclinaison plus raide que celle de la ligne limite (28) arrière, un axe (32) de la dépression (24) étant décalé par rapport à une ligne médiane radiale (34) du creux (22) de l'arête de filetage (14) d'un angle aigu (β) dans le sens de vissage (E), cet angle (β) ayant de préférence une valeur de l'ordre de 10° à 25°.

11. Vis selon l'une des revendications 1 à 10, **caractérisée en ce que** le filetage (12) s'étend jusqu'à l'extrémité (18) de la pointe de vis (6), le filetage (12) étant réalisé à partir de la pointe de vis (6), au moins sur le premier pas de vis suivant, avec les dépressions (24) et l'arête de filetage ondulée (14).

12. Vis selon l'une des revendications 1 à 11, **caractérisée en ce que** les dépressions (24) sont formées à l'opposé les unes des autres sur les deux flancs (15, 16) du filetage (12).

13. Vis selon l'une des revendications 1 à 12, **caractérisée en ce que** la distance entre les dépressions (24) dans la zone de la pointe de vis (6) diminue en direction de son extrémité (18).

14. Vis selon l'une des revendications 1 à 13, **caractérisée en ce que** le filetage (12) réalisé avec un seul filet présente un pas de vis (S) d'une valeur égale à environ 0,5 fois le diamètre extérieur (D) du filetage.

15. Vis selon l'une des revendications 1 à 14, **caractérisée en ce que** la pointe de vis (6) est réalisée avec des caractéristiques d'auto-préperçage.
